# EUROPÄISCHE PATENTANMELDUNG

(11) **EP 1 486 394 A2**
(43) Veröffentlichungstag der Anmeldung: **15.12.2004**
(21) Anmeldenummer: 04012390.3
(22) Anmeldetag: 26.05.2004
(51) Int. Cl.: B62B 3/06

(54) **Hubwagen, insbesondere Gabelhubwagen**

(30) Priorität: 11.06.2003 DE 10326708
(71) Anmelder: Franz Kahl GmbH, 36341 Lauterbach (DE)
(72) Erfinder: Seidlhuber, Alwin, Dipl.-Ing., 36304 Alsfeld (DE)
(74) Vertreter: Hebing, Norbert

(57) **Zusammenfassung**

Es wird ein Hubwagen, insbesondere Gabelhubwagen beschrieben, der sich dadurch auszeichnet, dass er mit einem besonders leicht zu bauenden Vorratsbehälter (21) versehen werden kann. Dazu ist auf einem Träger (18) zwischen einer Hebevorrichtung für die Hebebühne des Gabelhubwagens, einer Pumpe (11) und zwei Bügeln (19a, 19b) ein Raum geschaffen, in dem der Vorratsbehälter (21) angeordnet ist. Da er dort geschützt liegt, sind stoßartige Belastungen nicht zu befürchten, so dass er aus einem relativ leichten Kunststoff herstellbar ist, was sowohl die Herstellung als auch den Zusammenbau deutlich vereinfacht.

## Beschreibung

Die Erfindung bezieht sich auf einen Hubwagen, insbesondere einen Gabelhubwagen mit einem Fahrgestell und einer Hebebühne zur Aufnahme von Lasten, die zum Anheben der aufgenommenen Lasten gegenüber dem Fahrgestell in der Höhe verstellbar ist, wobei zwischen dem Fahrgestell und einem Kopf der Hebebühne eine hydraulische Hebevorrichtung angeordnet ist, die aus einem Hubzylinder und einem darin geführten Hubkolben besteht, wobei die im Zylinder vom Hubkolben begrenzte Hubkammer mit der Druckseite einer motorisch oder manuell mittels einer Deichsel betätigbaren hydraulischen Pumpe verbunden ist, an deren Saugseite ein Vorratsbehälter hydraulisch angeschlossen ist, wobei die Pumpe seitlich der Hebevorrichtung auf einem seitlich vom Hubzylinder abstehenden Träger angeordnet ist.

Ein Hubwagen der genannten Art, bei dem die Pumpe manuell mittels dessen Deichsel betätigbar ist, ist in der DE 22 12 292 C3 beschrieben. Der Vorratsbehälter ist eine um den Hubzylinder angeordnete Ringkammer.

Obwohl diese Konstruktion sehr häufig anzutreffen ist, hat sie doch den Nachteil, dass der Vorratsbehälter relativ exponiert angeordnet ist. Damit er im rauen Einsatzalltag des Hubwagens nicht beschädigt wird, ist er aus Metall hergestellt. Dies hat zur Folge, dass der Vorratsbehälter relativ schwer ist und sich die Konstruktion nur kostenaufwändig realisieren lässt.

Die Erfindung beruht somit auf der Aufgabe, einen Gabelhubwagen mit einem Vorratsbehälter zu schaffen, bei dem es sich um eine möglichst einfache und insbesondere leichte Konstruktion handelt, die trotzdem für die Einsatzbedingungen eines Gabelhubwagens geeignet ist.

Zur Lösung des Problems sieht die Erfindung vor, dass ein Hubwagen gemäß dem Oberbegriff des Anspruchs 1 einen Vorratsbehälter oberhalb des Trägers zwischen der Pumpe und der Hebevorrichtung aufweist.

Diese Anordnung hat den Vorteil, dass der Vorratsbehälter aus einem Kunststoff hergestellt werden kann. Derartige Behälter lassen sich im Spritzgussverfahren relativ leicht und kostengünstig realisieren. Durch seine Anordnung zwischen der Pumpe und der Hebevorrichtung liegt er allerdings relativ geschützt, so dass Stöße auf den Vorratsbehälter, die zu seiner Beschädigung führen könnten, nicht zu erwarten sind.

Der Schutz des Vorratsbehälters vor von außen einwirkenden Stößen kann verbessert werden, indem zwei Bügel an den Seiten des Trägers vorgesehen werden, die den Vorratsbehälter seitlich einschließen. An den oberen, den Vorratsbehälter überragenden Enden des Bügels ist die Deichsel des Hubwagens schwenkbar befestigt. Die Bügel haben somit zwei Aufgaben. Einerseits dienen sie dem Schutz des Vorratsbehälters, andererseits wird eine besonders einfache und günstige Anordnung für die Schwenklagerung der Deichsel geschaffen.

Um den Vorratsbehälter auch von oben zu schützen, ist eine Traverse vorgesehen, die die beiden Bügel miteinander verbindet und über den Vorratsbehälter verläuft. Diese dient außerdem zur Versteifung der durch die Bügel gebildeten Tragekonstruktion für die Deichsel. Darüber hinaus kann die Traverse als Anschlag für die Deichsel fungieren, wenn diese senkrecht gestellt ist.

Um den Platz zwischen dem Hubzylinder, der Pumpe und den beiden Bügeln möglichst gut auszunutzen, schmiegt sich der Vorratsbehälter an die Hebevorrichtung an. Dazu besitzt er an seiner Unterseite eine Stufe, mit der er auf dem oberen Rand des Hubzylinders aufsitzt. Außerdem hat der Vorratsbehälter an seiner der Hebevorrichtung zugewandten Seite eine an die Kontur des Hubkolbens angepasste Vertiefung.

Um die Verbindung des Vorratsbehälters zur Pumpe herstellen zu können, wird wie folgt vorgegangen: Der Vorratsbehälter besitzt einen unteren Anschlussstutzen, der in eine Buchse im Träger eingesteckt wird, wobei die Buchse über eine Bohrung im Träger mit der Pumpe verbunden ist. Dies ermöglicht eine schlauchfreie Verbindung des Vorratsbehälters mit der Pumpe.

Um einen sicheren Halt des Vorratsbehälters am Träger zu gewährleisten, ist er mit diesem verschraubt. Dazu besitzt eine Befestigungsschraube eine Längsbohrung. Sie wird durch deb Boden des Anschlussstutzens hindurch geführt und in ein Gewinde an Träger eingeschraubt. Die Längsbohrung in der Befestigungsschraube bildet dabei die hydraulische Verbindung zwischen dem Vorratsbehälter und der Bohrung im Träger. Zur Abdichtung der Verbindung befindet sich unterhald des Kopfes der Befestigungsschraube eine Dichtung.

Um die Schraube bei der Montage erreichen zu können, ist vorgesehen, dass die Nachfüllöffnung sich oberhalb des Anschlussstutzens befindet, so dass das entsprechende Montagewerkzeug durch diesen zur Schraube geführt werden kann.

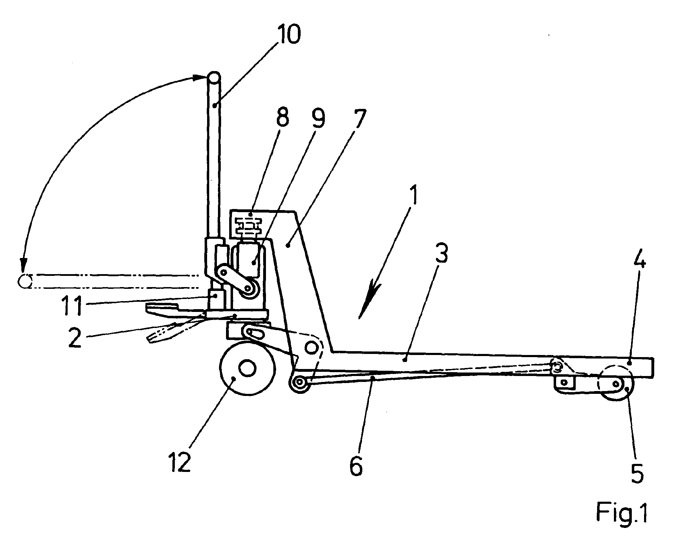

Im Folgenden wird anhand eines Ausführungsbeispieles die Erfindung näher erläutert. Dazu zeigen:
- Fig.1: eine Seitenansicht eines typischen Gabelhubwagens mit einer hydraulischen Hebevorrichtung, die mit einer manuell betätigbaren Pumpe verbunden ist,
- Fig.2: eine perspektivische Darstellung der Hebevorrichtung und der Pumpe,
- Fig.3: eine Draufsicht auf die Hebevorrichtung und die Pumpe,
- Fig.4: einen Schnitt entlang der Linie IV - IV in der Figur 3,
- Fig.5: eine Detaildarstellung der Befestigung des Vorratsbehälters.
zunächst wird auf die Figur 1 Bezug genommen. Diese zeigt einen typischen Gabelhubwagen 1 mit einem Fahrgestell 2 und einer Hebebühne 3. Demnach besteht die Hebebühne 3 aus zwei Gabeln 4, die z. B. in entsprechende Aussparungen einer Europalette eingeführt werden können. An den vorderen Enden der Gabeln 4 befindet sich jeweils ein Stützrad 5, das über ein Gestänge 6 beim Anheben der Hebebühne 3 nach unten weggeklappt wird. Die hinteren Enden der Gabeln 4 sind über eine Strebe 7 mit einem Kopf 8 verbunden. An dem Fahrgestell 2 befindet sich eine Hebevorrichtung 9, auf die der Kopf 8 der Hebebühne 3 aufliegt und eine in einer vertikalen Ebene verschwenkbare Deichsel 10, mit der eine hydraulische, mit der Hebevorrichtung 9 verbundene Pumpe 11 betätigbar ist.

Am Fahrgestell 2 befindet sich weiterhin ein Radpaar 12, das mit der Deichsel derart gekoppelt ist, dass durch eine seitliche Bewegung derselben der Gabelhubwagen 1 gelenkt werden kann.

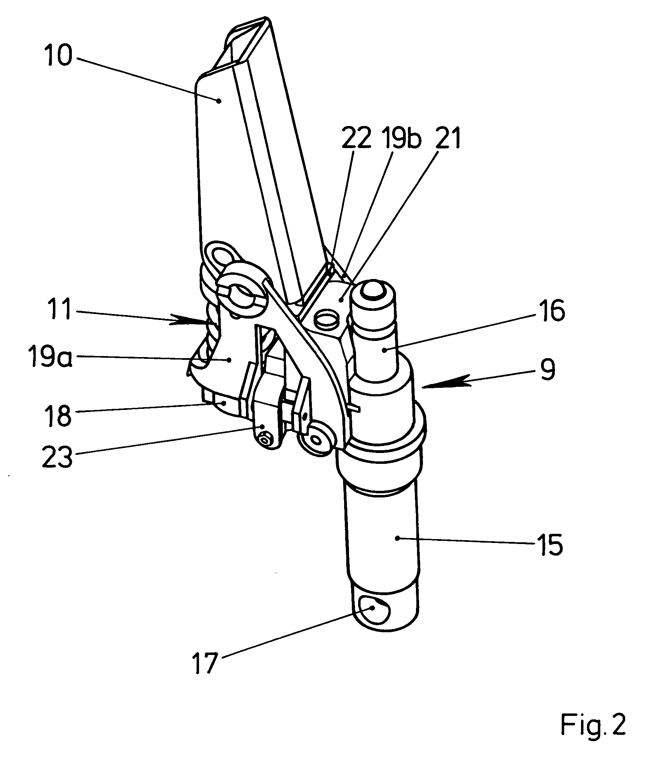

Figur 2 zeigt im Detail die Hebevorrichtung 9 mit der Pumpe. Die Hebevorrichtung 9 besteht aus einem Hubzylinder 15, in dem der Hubkolben 16 dichtend geführt ist. Auf dem aus dem Hubzylinder 15 herausragenden Ende des Hubkolbens 16 liegt der Kopf 8 der Hebebühne 3 auf. Am unteren Ende des Hubzylinders 15 befindet sich eine Lagerung 17 für die Achse des Radpaares 12.

Am oberen Ende des Hubzylinders 15 steht ein Träger 18 seitlich ab, an dessen beiden Seiten je ein Bügel 19a, 19b befestigt ist. An dem vom Hubzylinder 15 abgewandten Ende des Trägers 18 befindet sich eine Pumpe 11, die von der Deichsel 10, die schwenkbar an den oberen Enden der Bügel 19a, 19b gelagert ist, betätigbar ist. Wenn die Deichsel 10 nach unten geschwenkt wird, wird von der Pumpe 11 durch hier nicht näher dargestellte Bohrungen im Träger 18 und im Hubzylinder 15 Druckmittel in die Hubkammer des Hubzylinders 15 gedrückt, wodurch der Hubkolben 16 aus dem Hubzylinder 15 herausgefahren wird und die Hebebühne 3 anhebt. Seitlich eingerahmt von den beiden Bügeln 19a, 19b befindet sich zwischen dem Hubzylinder 15 bzw. dem Hubkolben 16 einerseits und der Pumpe 11 andererseits der aus einem Kunststoff bestehende Vorratsbehälter 21. Oberhalb des Vorratsbehälters 21 befindet sich eine Traverse 22, die die beiden Bügel 19a, 19b miteinander verbindet. wie der Darstellung entnommen werden kann, wird der Vorratsbehälter 21 von diversen Bauteilen eingerahmt und damit geschützt, so dass Beschädigungen durch stoßartige Einwirkungen nicht zu erwarten sind.

Zwischen dem Vorratsbehälter 21 und der Pumpe 11 befindet sich ein Hebel 23, der zur Steuerung eines hier nicht näher dargestellten Ventils dient. Wenn dieses durch Betätigen des Hebels 23 geöffnet wird, fließt Druckmittel aus der Hubkammer unmittelbar in den Vorratsbehälter 21, so dass der Hubkolben 16 abgesenkt wird.

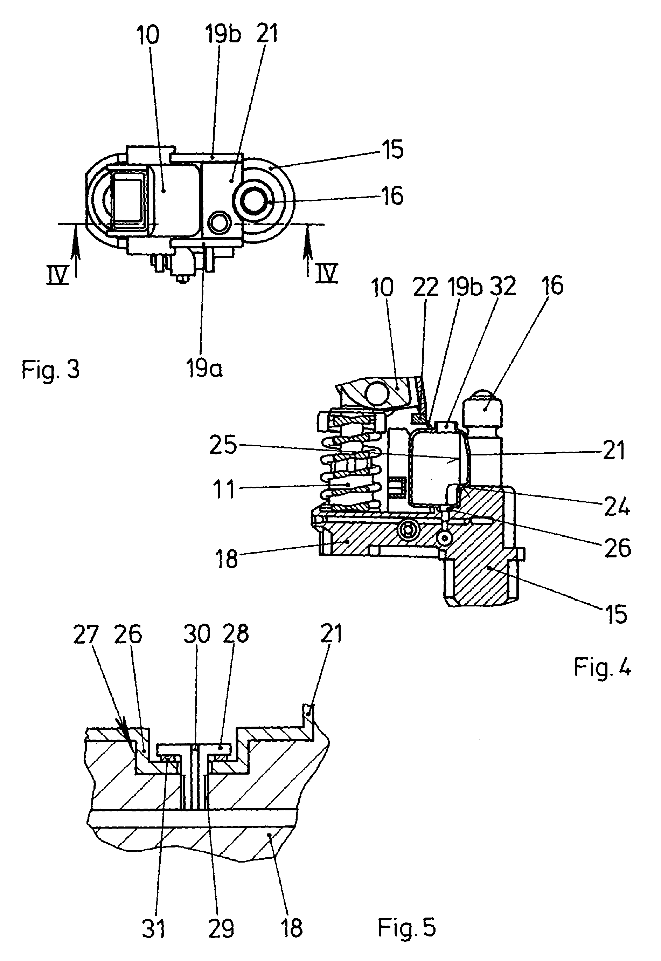

Die Anordnung des Vorratsbehälters 21 geht auch noch einmal aus der Figur 3 hervor. Man erkennt nochmals die Anordnung des Vorratsbehälters 21 zwischen der Hebevorrichtung einerseits und der Pumpe 11 andererseits.

Wie Figur 4 zeigt, schmiegt sich der Behälter an den Hubzylinder 15 und den Hubkolben 16 an, um den vorhandenen Platz gut ausnutzen zu können. Er besitzt dazu eine Stufe 24 an seiner Unterseite, mit der er auf dem oberen Ende des Hubzylinders 15 aufsitzt. Die Wand, die dem Hubkolben 16 zugewandt ist, hat eine Vertiefung 25 entsprechend der Kontur des Hubkolbens 16.

Am Boden des Vorratsbehälters 21 befindet sich ein Anschlussstutzen 26, der in eine entsprechende Ausnehmung 27 an der Oberseite des Trägers 18 eingeführt wird. Dies ist in der Figur 5 noch einmal näher dargestellt. Eine Schraube durchdringt den Boden des Stutzens 27 und ist in ein entsprechendes Gewinde im Träger eingeschraubt, so dass der Vorratsbehälter am Träger befestigt ist. In der Befestigungsschraube 28 befindet sich ein Längskanal 30, der die Verbindung zwischen dem Vorratsbehälter und den Bohrungen herstellt. Um die Verbindung zu dichten, befindet sich unterhalb des Kopfes der Befestigungsschraube eine Dichtung 31. Um die Schraube eindrehen zu können, befindet sich der Stutzen 26 unterhalb der Nachfüllöffnung 32 des Vorratsbehälters 21, so dass zum Festschrauben bzw. zum Lösen der Schraube das Werkzeug durch diese zur Schraube geführt werden kann.

### Bezugszeichenliste

- 1: Gabelhubwagen
- 2: Fahrgestell
- 3: Hebebühne
- 4: Gabel
- 5: Stützräder

- 6: Gestänge
- 7: Strebe
- 8: Kopf
- 9: Hebevorrichtung
- 10: Deichsel

- 11: Pumpe
- 12: Radpaar
- 13 14 15: Hubzylinder

- 16: Hubkolben
- 17: Lagerung
- 18: Träger
- 19a, 19b: Bügel

- 21: Vorratsbehälter
- 22: Traverse
- 23: Hebel
- 24: Stufe
- 25: Vertiefung

- 26: Anschlussstutzen
- 27: Buchse
- 28: Befestigungsschraube
- 29: Gewinde
- 30: Längsbohrung

- 31: Dichtung
- 32: Nachfüllöffnung

## Patentansprüche

1. Hubwagen, insbesondere Gabelhubwagen mit einem Fahrgestell und einer Hebebühne zur Aufnahme von Lasten, die zum Anheben der aufgenommenen Lasten gegenüber dem Fahrgestell in der Höhe verstellbar ist, wobei zwischen dem Fahrgestell und einem Kopf der Hebebühne eine hydraulische Hebevorrichtung angeordnet ist, die aus einem Hubzylinder und einem darin geführten Hubkolben besteht, wobei die im Zylinder vom Hubkolben begrenzte Hubkammer mit der Druckseite einer motorisch oder manuell mittels einer Deichsel betätigbaren hydraulischen Pumpe verbunden ist, an deren Saugseite ein Vorratsbehälter hydraulisch angeschlossen ist, wobei die Pumpe seitlich der Hebevorrichtung auf einem seitlich vom Hubzylinder abstehenden Träger angeordnet ist, **dadurch gekennzeichnet, dass** der Vorratsbehälter (21) oberhalb des Trägers (18) zwischen der Pumpe (11) und der Hebevorrichtung (9) angeordnet ist.

2. Hubwagen nach Anspruch 1, **dadurch gekennzeichnet, dass** an den beiden Seiten des Trägers (18) Bügel (19a, 19b) befestigt sind, an deren oberen Enden die Deichsel (10) schwenkbar gehalten ist, wobei die Bügel (19a, 19b) den Vorratsbehälter (21) seitlich einschließen.

3. Hubwagen nach Anspruch 2, **dadurch gekennzeichnet, dass** die Bügel (19a, 19b) mittels einer sich über den Vorratsbehälter (21) erstreckenden Traverse (22) miteinander verbunden sind.

4. Hubwagen nach Anspruch 3, **dadurch gekennzeichnet, dass** die Traverse (22) als Anschlag für die Deichsel (10) fungiert, wenn diese senkrecht gestellt ist.

5. Hubwagen nach einem der vorhergehenden Ansprüche, **dadurch gekennzeichnet, dass** der Vorratsbehälter (21) an seiner Unterseite eine Stufe (24) besitzt, mit der dieser auf den oberen Rand des Hubzylinders (15) aufsitzt, und an seiner der Hebevorrichtung zugewandten Seite eine sich an die Kontur des Hubkolbens (16) angepasste Vertiefung (25) aufweist.

6. Hubwagen nach einem der vorhergehenden Ansprüche, **dadurch gekennzeichnet**, das der Vorratsbehälter (21) einen unteren Anschlussstutzen (26) aufweist und im Träger (18) eine Buchse (27) zur Aufnahme des Anschlussstutzens (26) ausgebildet ist, wobei die Buchse (27) über eine Bohrung im Träger (18) mit der Pumpe (11) verbunden ist.

7. Hubwagen nach Anspruch 6, **dadurch gekennzeichnet, dass** die hydraulische Verbindung zwischen dem Vorratsbehälter (21) und der Bohrung im Träger (18) mittels einer Längsbohrung (30) in einer Befestigungsschraube (28) hergestellt ist, die der Befestigung der Vorratsbehälter (21) am Träger (18) dient, wozu die Befestigungsschraube (28) durch den Boden des Anschlussstutzens (26) hindurchgeführt ist und in ein Gewinde (29) am Träger (18) eingeschraubt ist.

8. Hubwagen nach Anspruch 7, **dadurch gekennzeichnet, dass** der Vorratsbehälter (21) eine Nachfüllöffnung (32) oberhalb des Anschlussstutzens (26) aufweist.
